# FASCICULE DE BREVET EUROPEEN

(11) **EP 3 228 834 B1**
(45) Date de publication et mention de la délivrance du brevet: **15.09.2021**
(21) Numéro de dépôt: 17164524.5
(22) Date de dépôt: 03.04.2017
(51) Int. Cl.: F01D 25/02, F02C 7/047, B64C 1/06, B64D 15/12, B64D 15/20, B64D 13/06, B64D 33/02

(54) **AUBE DE TURBOMACHINE, COMPRESSEUR,TURBOMACHINE ET PROCÉDÉ DE RÉALISATION ASSOCIÉ**
SCHAUFEL EINER STRÖMUNGSMASCHINE, ZUGEHÖRIGE VERDICHTER, STRÖMUNGSMASCHINE UND HERSTELLUNGSVERFAHREN
TURBOMACHINE BLADE, CORRESPONDING COMPRESSOR, TURBOMACHINE AND PRODUCTION METHOD

(30) Priorité: 08.04.2016 BE 201605241
(43) Date de publication de la demande: 11.10.2017
(73) Titulaire: Safran Aero Boosters SA, 4041 Herstal (BE)
(72) Inventeur: VALLINO, Frédéric, 4100 Seraing (BE)
(74) Mandataire: Lecomte & Partners

(56) Documents cités:
- WO-A1-2014/143255
- CN-A- 103 925 169
- US-A- 3 997 758
- US-A- 5 281 091
- US-A1- 2008 041 842
- US-A1- 2010 096 507
- US-A1- 2014 191 084

## Description

### Domaine technique

L'invention se rapporte au domaine du dégivrage électrique des aubes de turbomachine. L'invention concerne également un compresseur de turbomachine, ainsi qu'une turbomachine tel un turboréacteur d'avion ou un turbopropulseur d'aéronef. L'invention propose également un procédé de réalisation d'une aube de turbomachine avec un dispositif dégivrant électrique.

### Technique antérieure

Un turboréacteur est sujet au phénomène de givrage pendant son fonctionnement. Les basses températures couplées à la présence d'humidité dans l'air favorisent la formation de givre sur les surfaces fonctionnelles internes. Bien sûr cette glace alourdit le turboréacteur, mais surtout elle pénalise son bon fonctionnement puisqu'elle modifie les profils des surfaces guidant le flux primaire. Le rendement global s'en retrouve pénalisé.

Par ailleurs, l'épaisseur du givre peut augmenter en s'accumulant progressivement sur la surface qui le supporte. Ce développement peut donner naissance à de véritables blocs de glaces qui représentent des risques potentiels. En effet, dans le scénario où ils se détachent, le compresseur qui les aspire se dégrade. En particulier, ses aubes de rotor qui les heurtent s'abiment ; et éventuellement rompent.

Afin de contrer tant la présence que l'apparition de givre, les aubes du compresseur sont équipées de dispositifs électriques chauffants. En alimentant électriquement ces dispositifs, ils chauffent les aubes par effet joule. L'alimentation est suffisante pour faire fondre la glace éventuellement présente, ou pour s'opposer à son apparition.

Ainsi, le document GB672658 A divulgue une aube pour un compresseur de turbomachine comprenant un élément électrique chauffant. L'aube inclue notamment une feuille de matériau électrique isolante sur laquelle est enroulée en surface un fil résistif. L'élément chauffant est connecté à une alimentation électrique. En condition de givrage, un courant électrique traverse le fil résistif de l'élément chauffant et génére de la chaleur à l'intérieur de l'aube. Cela permet de faire fondre et d'éliminer la glace formée en surface. Ce système de dégivrage, bien qu'efficace, reste complexe. Son coût reste élevé en plus d'être encombrant. Par ailleurs sa précision reste approximative.

Le document US2010/0096507 A1 divulgue une pièce d'aéronef avec un dispositif dégivrant. Le dispositif comprend une thermistance en surface.

### Résumé de l'invention

### Problème technique

L'invention a pour objectif de résoudre au moins un des problèmes posés par l'art antérieur. Plus précisément, l'invention a pour objectif de simplifier le dégivrage d'une aube de turbomachine. L'invention a également pour objectif de proposer une solution compacte, économique, robuste, et facile à installer sur une aube de turbomachine axiale.

### Solution technique

L'invention a pour objet une aube de turbomachine selon la revendication 1.

Selon un mode avantageux de l'invention, la thermistance est logée dans l'épaisseur de l'aube entre la surface extrados et/ou sur la surface intrados. Selon un mode avantageux de l'invention, la thermistance est à coefficient de température positive ou à coefficient de température négatif.

Selon un mode avantageux de l'invention, la thermistance longe le bord d'attaque et/ou le bord de fuite de l'aube.

Selon un mode avantageux de l'invention, la thermistance est à distance du bord d'attaque et/ou du bord de fuite de l'aube.

Selon un mode avantageux de l'invention, la thermistance s'étend sur la majorité de la hauteur de l'aube et/ou sur la majorité de la corde de l'aube. Selon un mode avantageux de l'invention, la thermistance forme un ruban conducteur ou un câble épousant la surface extrados et/ou la surface intrados de l'aube.

Selon un mode avantageux de l'invention, la thermistance forme un serpentin est inscrit dans une zone occupant la majorité de la surface intrados ou/et de la surface extrados de l'aube.

Selon un mode avantageux de l'invention, la thermistance traverse ou reste à distance de ladite plateforme de fixation.

L'invention a également pour objet un compresseur de turbomachine, notamment un compresseur basse pression de turbomachine axiale, le compresseur comprenant une aube remarquable en ce que l'aube est conforme à l'invention, éventuellement ladite aube est disposée dans une rangée annulaire d'aubes à l'entrée du compresseur.

L'invention a également pour objet une turbomachine, notamment un turboréacteur d'avion, la turbomachine comprenant une aube et/ou un compresseur caractérisée en ce que l'aube est conforme à l'invention, et/ou le compresseur est conforme à l'invention.

Selon un mode avantageux de l'invention, le dispositif dégivrant est configuré pour mesurer la température de l'aube au moyen de la thermistance.

Selon un mode avantageux de l'invention, le dispositif dégivrant est adapté pour mesurer la température de la thermistance en l'alimentant avec un premier courant, et pour dégivrer l'aube en alimentant la thermistance avec un deuxième courant supérieur au premier courant.

De manière générale, les modes avantageux de chaque objet de l'invention sont également applicables aux autres objets de l'invention. Dans la mesure du possible, chaque objet de l'invention est combinable aux autres objets.

L'invention a également pour objet un procédé de réalisation d'une aube de turbomachine avec un dispositif dégivrant électrique, le procédé comprenant les étapes suivantes : (a) fourniture ou réalisation d'une aube ; (b) réalisation du dispositif dégivrant; (c) fixation du dispositif dégivrant sur l'aube ; remarquable en ce que le dispositif dégivrant comprend une thermistance adaptée pour dégivrer l'aube, et en ce que lors de l'étape (b) réalisation, la thermistance est produite par impression ; éventuellement à l'issue de l'étape (c) fixation, l'aube est conforme à l'invention.

Selon un mode avantageux de l'invention, lors de l'étape (a) fourniture ou réalisation d'une aube, l'aube est réalisée par fabrication additive à base de poudre.

Selon un mode avantageux de l'invention, lors de l'étape (c) fixation, la thermistance est collée sur l'aube.

Selon un mode avantageux de l'invention, lors de l'étape (c) fixation, la thermistance est fixée sur l'aube.

### Avantages apportés

L'invention est intéressante car l'emploi d'une thermistance permet à la fois de disposer d'un conducteur électrique chauffant et d'un capteur de température.

Dès lors, une seule opération de fixation permet d'ajouter deux fonctions à l'aube. Le coût de revient et le temps de réalisation sont diminués.

L'invention est précise et efficace. Elle mesure au plus près la température de l'aube et y apporte, toujours au plus près, les calories nécessaires. La thermistance est donc apte à assurer une double fonction sur une face directement concernée par le givre.

L'invention permet de tendre vers l'automatisation du dispositif dégivrant. À l'aide d'une thermistance à coefficient négatif (CTN), il est possible de d'augmenter sa résistance lorsque la température diminue, si bien que les calories obtenues par effet joule augmentent pour une même alimentation. Les moyens de commandes peuvent alors être simplifiés et éventuellement supprimés.

Suivant une autre approche, il peut être considéré que la couche de givre apporte une isolation thermique. Dès lors, lorsque la température devrait baisser en raison de l'altitude mais que la température mesurée par la thermistance ne baisse pas en conséquence, davantage de calories doivent être apportées. Dans ce contexte, une thermistance à coefficient positif (CTP) peut être employée pour tendre vers une autorégulation.

### Brève description des dessins

La figure 1 représente une turbomachine axiale selon l'invention.
La figure 2 est un schéma d'un compresseur de turbomachine selon l'invention.
La figure 3 illustre une aube et le dispositif dégivrant selon l'invention.
La figure 4 est une coupe de l'aube suivant l'axe 4-4 tracé sur la figure 3 selon l'invention.
La figure 5 montre un diagramme du procédé de réalisation d'une aube de turbomachine avec un dispositif dégivrant selon l'invention.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation.

L'amont et l'aval sont en référence au sens d'écoulement principal du flux dans la turbomachine.

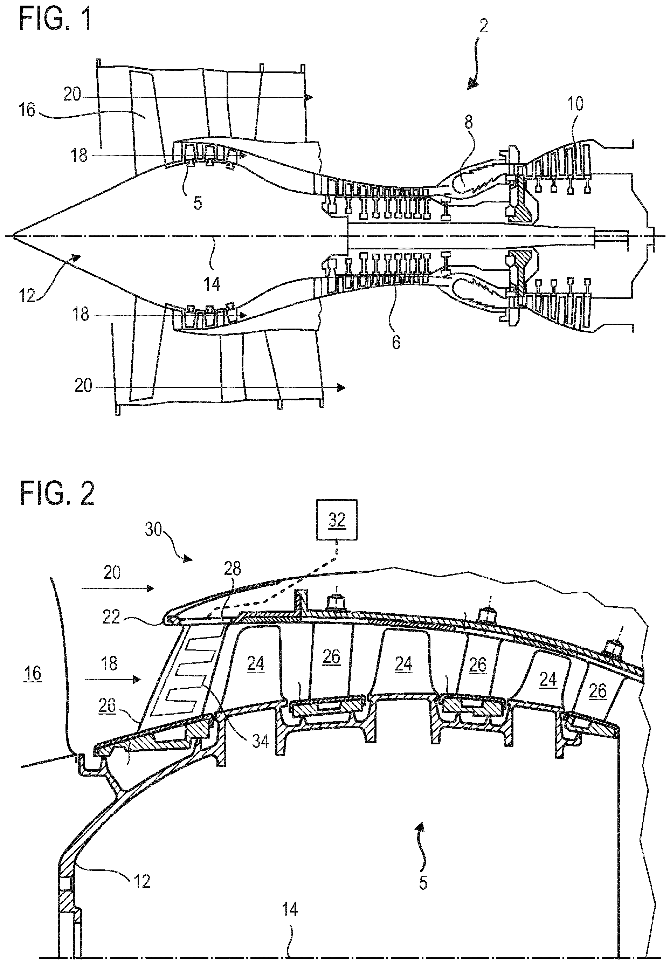

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 5, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 5 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire 20 peut être accéléré de sorte à générer une réaction de poussée permettant le vol d'un avion.

La figure 2 est une vue en coupe d'un compresseur 5 d'une turbomachine axiale telle que celle de la figure 1. Le compresseur peut être un compresseur basse-pression 5. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 5 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air 18, de sorte à convertir la vitesse du flux en pression statique.

Avantageusement, les aubes (24 ; 26) d'une même rangée sont identiques. Optionnellement, l'espacement entre les aubes peut varier localement tout comme leurs orientations angulaires. Certaines aubes peuvent différer du reste des aubes de leur rangée.

Les aubes statoriques 26 peuvent comprendre des plateformes de fixation 28 permettant de les monter sur un carter support, ou au bec de séparation 22, ou à une virole externe engagée dans le bec de séparation 22. Les aubes statoriques 26 s'étendent essentiellement radialement depuis le carter extérieur du compresseur, et peuvent y être fixées et immobilisées à l'aide d'axes issus des plateformes de fixation 28.

En entrée, le compresseur 5 présente une rangée annulaire d'aubes statoriques 26, soit celle du redresseur amont. Puisque ces dernières sont particulièrement exposées au phénomène de givrage, un dispositif dégivrant 30 est prévu. Le dispositif dégivrant 30 regroupe une unité de commande 32 qui alimente électriquement une ou plusieurs thermistances 34 associées à au moins une, ou à plusieurs, ou à chaque aube de la rangée d'aubes statoriques 26 en entrée du compresseur. La rangée en entrée est la première rangée en amont du compresseur.

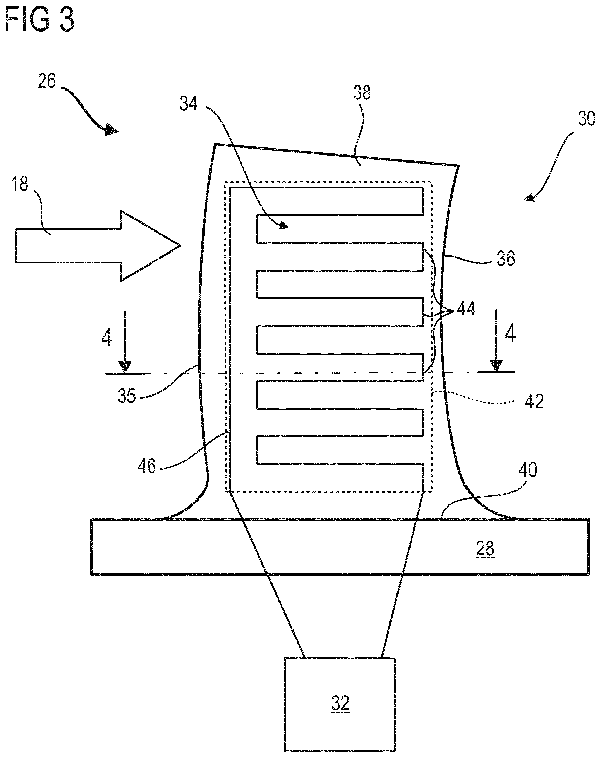

La figure 3 esquisse une aube statorique 26 et le dispositif dégivrant 30. L'aube statorique 26 peut correspondre à l'une des aubes statoriques décrites en relation avec les figures 1 et 2. La plateforme de fixation 28 est visible. Bien que le présent enseignement soit développé en relation avec une aube statorique, il peut également être adapté pour une aube rotorique.

L'aube statorique 26 comprend un bord d'attaque 34 et un bord de fuite 36 qui s'étendent suivant la hauteur de l'aube 26. La surface intrados et la surface extrados s'étendent du bord d'attaque 35 au bord de fuite 36 de l'aube 26. Elles joignent la tête 38 et le pied 40 de l'aube 26. Ces surfaces sont destinées à traverser le flux primaire 18 et à le dévier pour le rendre axial. L'une des surfaces, intrados ou extrados, reçoit la thermistance 34. Cette dernière forme une piste électrique chauffante lorsqu'elle est alimentée en courant. L'alimentation, et la résistance électrique de la thermistance 34 sont configurées pour permettre le dégivrage de l'aube 26, notamment pour les températures de fonctionnement d'un turboréacteur, que ce soit au sol ou en altitude.

La thermistance 34 peut former un serpentin. Le serpentin est logé dans une zone 42 qui occupe la majorité de la surface intrados ou de la surface extrados de l'aube 26. Le serpentin forme des créneaux 44 occupant la majorité de la face recevant la thermistance 34. Les créneaux 44 peuvent montrer un allongement principal agencé selon la corde de l'aube 26 ou selon sa hauteur. La thermistance 34 est un conducteur électrique, ou peut être un semiconducteur. Elle forme un ruban ou un câble. La thermistance 34 s'étend sur sensiblement toute la hauteur et/ou sur sensiblement toute la corde de l'aube 26. Elle longe le bord d'attaque et le bord de fuite. Un tronçon 46, par exemple un tronçon radial, peut longer le bord d'attaque 35 et/ou le bord de fuite 36 de l'aube 26. Cependant, ce tronçon 46 reste à distance du bord d'attaque afin de rester protégé. Des bandes séparent la thermistance 34 du bord d'attaque 35 et du bord de fuite 36. En retrait, les phénomènes d'ingestion et d'abrasion risquent moins de dégrader la thermistance. La durée de vie du dispositif est prolongée.

La thermistance peut être à coefficient de température négatif (CTN). Une thermistance CTN peut comprendre un oxyde d'un métal de transition ; par exemple un oxyde de manganèse, un oxyde de cobalt, un oxyde de cuivre, ou un oxyde de nickel. La thermistance CTN peut également comprendre une combinaison de ces oxydes de métaux de transition. Alternativement, la thermistance peut être à coefficient de température positif (CTP). La thermistance CTP peut comprendre du titanate de baryum, ou encore un alliage de polymères. Par exemple, elle peut comprendre un ou plusieurs des matériaux décrits dans le document FR2921194A1.

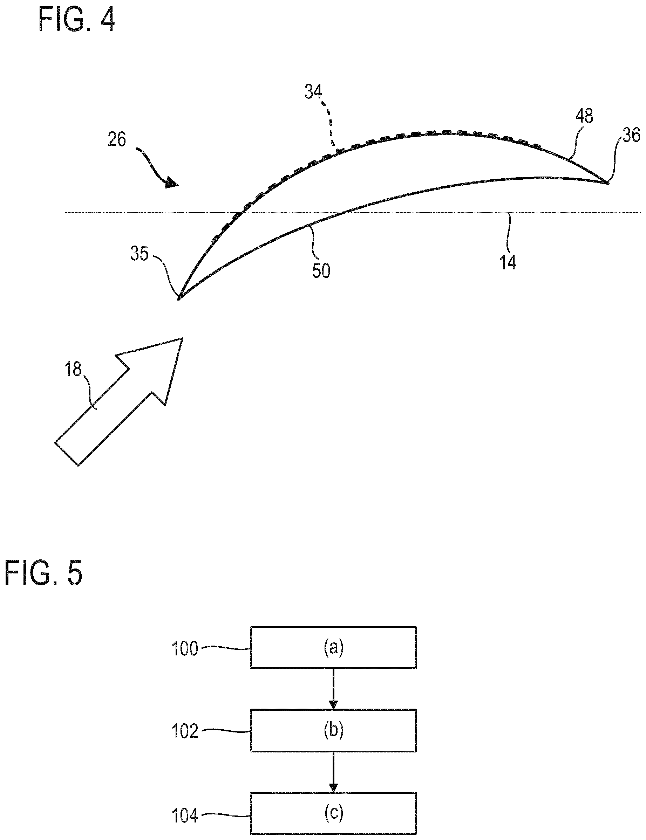

Bien qu'une seule aube 26 soit représentée, il est envisageable de brancher plusieurs aubes en parallèle en en série, de sorte que leurs thermistances respectives soient à leur tour branchées en parallèle en en série. Plusieurs aubes à thermistance peuvent être reliées à la même unité de commande 32. La figure 4 représente une coupe de l'aube 26 illustrée en figure 3, la coupe étant effectuée selon l'axe 4-4. L'axe de rotation 14 est tracé en guise de repère d'orientation.

La thermistance 34 apparaît sur la surface extrados 48. Cette position offre un bénéfice puisqu'ici elle est protégée de l'érosion induite par le flux primaire 18.

Sur le profil de l'aube 26 illustré, la thermistance 34 reste à distance à la fois du bord d'attaque 35 comme du bord de fuite 36, toutefois elle pourrait toucher l'un de ces bords (35 ; 36), par exemple le bord de fuite 36.

La thermistance 34 recoure l'extrados de l'aube 26. Elle forme, au moins partiellement, la surface externe en contact du flux primaire 18. En complément ou en alternative, la thermistance 34 peut couvrir la surface intrados 50, respectivement en plus ou à la place de la surface extrados 48.

Suivant une alternative de l'invention, la thermistance peut être à cœur de l'aube, par exemple au milieu de l'épaisseur de l'aube. Elle peut être noyée dans la matière de l'aube, entre la surface intrados et la surface extrados. Cette alternative peut également être combinée aux solutions précitées.

La figure 5 est un diagramme du procédé de réalisation d'une aube à dispositif dégivrant selon l'invention. L'aube peut être conforme à celle(s) décrite(s) en relation avec les figures 1 à 4.

Le procédé peut comprendre les étapes suivantes, éventuellement réalisé dans cet ordre :
(a) fourniture ou réalisation 100 d'une aube ;
(b) réalisation 102 du dispositif dégivrant ;
(c) fixation 104 du dispositif dégivrant à l'aube ;

Lors de l'étape (a) fourniture ou réalisation 100, l'aube est réalisée par fabrication additive à base de poudre. La poudre peut être une poudre titane. La fabrication peut employer un faisceau d'électrons. Suivant une alternative, l'aube peut être produite par fonderie, ou être taillée dans la masse.

Lors de l'étape (b) réalisation 102, la thermistance est produite par impression. Une encre conductrice, présentant des propriétés de thermistance est employée. Elle est mise en œuvre sur un substrat qui est ensuite appliqué contre l'aube. Le substrat est optionnellement enlevé après application. Cependant la thermistance peut être produite selon tout autre moyen.

Lors de l'étape (c) fixation 104, la thermistance est collée sur l'aube. Toutefois, la thermistance peut être liée à l'aube en étant noyé dans son épaisseur.

## Revendications

1. Aube (26) de turbomachine (2), notamment une aube statorique (26) de turbomachine axiale (2), l'aube (26) comprenant :
un bord d'attaque (35) ;
un bord de fuite (36) ;
une surface intrados (50) et une surface extrados (48) qui s'étendent du bord d'attaque (35) au bord de fuite (36); et
un dispositif dégivrant (30) électrique qui comporte une thermistance (34) formant une piste électrique chauffante adaptée pour dégivrer l'aube (26) ;
**caractérisé en ce que**
l'aube (26) comprend une plateforme de fixation (28),
le dispositif dégivrant (30) traversant ladite plateforme de fixation (28).

2. Aube (26) selon la revendication 1, **caractérisée en ce que** la thermistance (34) est logée dans l'épaisseur de l'aube (26) entre la surface extrados (48) et/ou sur la surface intrados (50).

3. Aube (26) selon l'une des revendications 1 à 2, **caractérisée en ce que** la thermistance (34) est à coefficient de température positive ou à coefficient de température négatif.

4. Aube (26) selon l'une des revendications 1 à 3, **caractérisée en ce que** la thermistance (34) longe le bord d'attaque (35) et/ou le bord de fuite (36) de l'aube (26).

5. Aube (26) selon l'une des revendications 1 à 4, **caractérisée en ce que** la thermistance (34) est à distance du bord d'attaque (35) et/ou du bord de fuite (36) de l'aube (26).

6. Aube (26) selon l'une des revendications 1 à 5, **caractérisée en ce que** la thermistance (34) s'étend sur la majorité de la hauteur de l'aube (26) et/ou sur la majorité de la corde de l'aube (26).

7. Aube (26) selon l'une des revendications 1 à 6, **caractérisée en ce que** la thermistance (34) forme un ruban conducteur ou un câble épousant la surface extrados (48) et/ou la surface intrados (50) de l'aube (26).

8. Aube (26) selon l'une des revendications 1 à 7, **caractérisée en ce que** la thermistance (34) forme un serpentin inscrit dans une zone (42) occupant la majorité de la surface intrados (50) ou/et de la surface extrados (48) de l'aube (26).

9. Aube (26) selon l'une des revendications 1 à 8, **caractérisée en ce que** la thermistance (34) traverse ou reste à distance de ladite plateforme de fixation (28).

10. Compresseur (5) de turbomachine (2), notamment un compresseur basse pression (5) de turbomachine axiale (2), le compresseur (5) comprenant une aube (26) **caractérisé en ce que** l'aube (26) est conforme à l'une des revendications 1 à 9, éventuellement ladite aube (26) est disposée dans une rangée annulaire d'aubes (26) à l'entrée du compresseur (5).

11. Turbomachine (2), notamment un turboréacteur d'avion, la turbomachine (2) comprenant une aube (26) et/ou un compresseur (5) **caractérisée en ce que** l'aube (26) est conforme à l'une des revendications 1 à 9, et/ou le compresseur est conforme à la revendication 10.

12. Turbomachine (2) selon la revendication 11, **caractérisée en ce que** le dispositif dégivrant (30) est configuré pour mesurer la température de l'aube (26) au moyen de la thermistance (34).

13. Turbomachine (2) selon l'une des revendications 11 à 12, **caractérisée en ce que** le dispositif dégivrant (30) est adapté pour mesurer la température de la thermistance (34) en l'alimentant avec un premier courant, et pour dégivrer l'aube (26) en alimentant la thermistance (34) avec un deuxième courant supérieur au premier courant.

14. Procédé de réalisation d'une aube (26) de turbomachine (2) avec un dispositif dégivrant (30) électrique, le procédé comprenant les étapes suivantes :
(a) fourniture ou réalisation (100) d'une aube (26);
(b) réalisation (102) du dispositif dégivrant (30);
(c) fixation (104) du dispositif dégivrant (30) sur l'aube (26);
**caractérisé en ce que**
le dispositif dégivrant (30) comprend une thermistance (34) adaptée pour dégivrer l'aube (26), et **en ce que** lors de l'étape (b) réalisation (102), la thermistance (34) est produite par impression ; éventuellement à l'issue de l'étape (c) fixation (104), l'aube (26) est conforme à l'une des revendications 1 à 9.

15. Procédé selon la revendication 14, **caractérisé en ce que** lors de l'étape (a) fourniture ou réalisation (100) d'une aube, l'aube (26) est réalisée par fabrication additive à base de poudre, et/ou lors de l'étape (c) fixation (104), la thermistance (34) est collée sur l'aube (26).

## Patentansprüche

1. Schaufel (26) einer Turbomaschine (2), insbesondere eine Statorschaufel (26) einer axialen Turbomaschine (2), wobei die Schaufel (26) umfasst: eine Vorderkante (35); eine Hinterkante (36); eine Druckfläche (50) und eine Saugfläche (48), die sich von der Vorderkante (35) zur Hinterkante (36) erstrecken; und
eine elektrische Enteisungsvorrichtung (30), die einen Thermistor (34) enthält, der eine elektrische Wärmespur bildet, die geeignet ist, die Schaufel (26) zu enteisen, **dadurch gekennzeichnet, dass** die Schaufel (26) eine Befestigungsplattform (28) umfasst, wobei sich die Enteisungsvorrichtung (30) durch die Befestigungsplattform (28) erstreckt.

2. Schaufel (26) nach Anspruch1, **dadurch gekennzeichnet, dass** der Thermistor (34) in der Dicke der Schaufel (26) zwischen der Saugfläche (48) bzw. der Druckfläche (50) angeordnet ist.

3. Schaufel (26) nach Anspruch1 bis 2, **dadurch gekennzeichnet, dass** der Thermistor (34) einen positiven Temperaturkoeffizienten oder einen negativen Temperaturkoeffizienten hat.

4. Schaufel (26) nach Anspruch1 bis 3, **dadurch gekennzeichnet, dass** der Thermistor (34) entlang der Vorderkante (35) und/ oder der Hinterkante (36) der Schaufel (26) verläuft.

5. Schaufel (26) nach Anspruch1 bis 4, **dadurch gekennzeichnet, dass** der Thermistor (34) von der Vorderkante (35) und/ oder der Hinterkante (36) der Schaufel (26) beabstandet ist.

6. Schaufel (26) nach Anspruch1 bis 5, **dadurch gekennzeichnet, dass** der Thermistor (34) sich über den größten Teil der Höhe der Schaufel (26) und/oder über den größten Teil der Sehne der Schaufel (26) erstreckt.

7. Schaufel (26) nach Anspruch1 bis 6, **dadurch gekennzeichnet, dass** der Thermistor (34) leitfähiges Band oder Kabel bildet, das der Saugfläche (48) und / oder der Druckfläche (50) der Schaufel (26) entspricht.

8. Schaufel (26) nach Anspruch1 bis 7, **dadurch gekennzeichnet, dass** der Thermistor (34) eine eingeschriebene Spule in einem Bereich (42) bildet, der den größten Teil der Druckfläche (50) und/oder der Saugfläche (48) der Schaufel (26) einnimmt.

9. Schaufel (26) nach Anspruch1 bis 8, **dadurch gekennzeichnet, dass** der Thermistor (34) die Befestigungsplattform (28) überquert oder von ihr beabstandet bleibt.

10. Verdichter (5) der Turbomaschine (2), insbesondere ein Niederdruckverdichter (5) der axialen Turbomaschine (2), wobei der Verdichter (5)
eine Schaufel (26) umfasst, **dadurch gekennzeichnet, dass** die Schaufel (26) nach einem der Ansprüche 1 bis 9 ist, wobei die Schaufel (26) optional in einer ringförmigen Reihe von Schaufeln (26) am Einlass des Verdichters (5) angeordnet ist.

11. Turbomaschine (2), insbesondere ein Flugzeugturbotriebwerk, wobei die Turbomaschine (2) eine Schaufel (26) und/oder einen Verdichter (5) umfasst, **dadurch gekennzeichnet, dass** die Schaufel (26) einem der Ansprüche 1 bis 9 entspricht, und/oder der Verdichter dem Anspruch 10 entspricht.

12. Turbomaschine (2) nach einem der Ansprüche 11, **dadurch gekennzeichnet, dass** die Enteisungsvorrichtung (30) konfiguriert ist, die Temperatur der Schaufel (26) mit Hilfe des Thermistors (34) zu messen.

13. Turbomaschine (2) nach einem der Ansprüche 11 bis 12, **dadurch gekennzeichnet, dass** die Enteisungsvorrichtung (30) geeignet ist, die Temperatur des Thermistors (34) zu messen, indem er mit einem ersten Strom versorgt wird, und die Schaufel (26) zu enteisen, indem der Thermistor (34) mit einem zweiten Strom versorgt wird, der größer als der erste Strom ist.

14. Verfahren zur Herstellung einer Schaufel (26) einer Turbomaschine (2) mit einer elektrischen Enteisungsvorrichtung (30), wobei das Verfahren folgende Schritte umfasst:
(a) Bereitstellung oder Herstellung (100) einer Schaufel (26)
(b) Herstellung (102) der Enteisungsvorrichtung (30);
(c) Befestigen (104) der Enteisungsvorrichtung (30) an der Schaufel (26); **dadurch gekennzeichnet, dass** die Enteisungsvorrichtung (30) einen Thermistor (34) umfasst, der geeignet ist, die Schaufel (26) zu enteisen, und dass in Schritt (b) Herstellung (102), der Thermistor (34) durch Drucken hergestellt wird; gegebenenfalls am Ende von Schritt (c) Befestigen (104), wobei die Schaufel (26) einem der Ansprüche 1 bis 9 entspricht.

15. Verfahren nach Anspruch 14, **dadurch gekennzeichnet, dass** beim Schritt (a) Bereitstellung oder Herstellung (100) einer Schaufel, die Schaufel (26) durch additive Herstellung auf Pulverbasis hergestellt wird und / oder beim Schritt (c) der Befestigung (104) der Thermistor (34) auf die Schaufel (26) geklebt wird.

## Claims

1. Turbine engine (2) blade (26), particularly an axial turbine engine (2) stator blade (26), the blade (26) comprising:
a leading edge (35);
a trailing edge (36);
a lower surface (50) and an upper surface (48) which extend from the leading edge (35) to the trailing edge (36); and
an electric de-icing device (30) including a thermistor (34) forming a heating electrical track suitable for de-icing the blade (26),
**characterized in that**
the blade (26) comprises a fixing platform (28),
the de-icing device (30) passing through said fixing platform (28).

2. Blade (26) according to Claim 1, **characterized in that** the thermistor (34) is housed in the thickness of the blade (26) between the upper surface (48) and/or on the lower surface (50).

3. Blade (26) according to any of Claims 1 and 2, **characterized in that** the thermistor (34) has a positive temperature coefficient or a negative temperature coefficient.

4. Blade (26) according to any of Claims 1 to 3, **characterized in that** the thermistor (34) runs along the leading edge (35) and/or the trailing edge (36) of the blade (26).

5. Blade (26) according to any of Claims 1 to 4, **characterized in that** the thermistor (34) is at a distance from the leading edge (35) and/or from the trailing edge (36) of the blade (26).

6. Blade (26) according to any of Claims 1 to 5, **characterized in that** the thermistor (34) extends over the majority of the height of the blade (26) and/or over the majority of the chord of the blade (26).

7. Blade (26) according to any of Claims 1 to 6, **characterized in that** the thermistor (34) forms a conductive ribbon or a cable closely following the upper surface (48) and/or the lower surface (50) of the blade (26).

8. Blade (26) according to any of Claims 1 to 7, **characterized in that** the thermistor (34) forms a coil that is put down in a zone (42) occupying the majority of the lower surface (50) or/and of the upper surface (48) of the blade (26).

9. Blade (26) according to any of Claims 1 to 8, **characterized in that** the thermistor (34) passes through or remains at a distance from said fixing platform (28).

10. Turbine engine (2) compressor (5), particularly an axial turbine engine (2) low-pressure compressor (5), the compressor (5) comprising a blade (26), **characterized in that** the blade (26) is in accordance with any of Claims 1 to 9, possibly said blade (26) is arranged in an annular row of blades (26) at the inlet of the compressor (5).

11. Turbine engine (2), particularly an aeroplane turbojet, the turbine engine (2) comprising a blade (26) and/or a compressor (5), **characterized in that** the blade (26) is in accordance with any of Claims 1 to 9, and/or the compressor is in accordance with Claim 10.

12. Turbine engine (2) according to Claim 11, **characterized in that** the de-icing device (30) is configured to measure the temperature of the blade (26) by means of the thermistor (34).

13. Turbine engine (2) according to any of Claims 11 and 12, **characterized in that** the de-icing device (30) is suitable for measuring the temperature of the thermistor (34) by powering it with a first current, and for de-icing the blade (26) by powering the thermistor (34) with a second current greater than the first current.

14. Method of producing a turbine engine (2) blade (26) with an electric de-icing device (30), the method comprising the following steps:
(a) providing or producing (100) a blade (26);
(b) producing (102) the de-icing device (30);
(c) fixing (104) the de-icing device (30) on the blade (26);
**characterized in that**
the de-icing device (30) comprises a thermistor (34) suitable for de-icing the blade (26), and **in that**, during the production (102) step (b), the thermistor (34) is produced by printing; possibly at the end of the fixing (104) step (c), the blade (26) is in accordance with any of Claims 1 to 9.

15. Method according to Claim 14, **characterized in that**, during the step (a) for providing or producing (100) a blade, the blade (26) is produced by powder-based additive manufacturing, and/or during the fixing (104) step (c), the thermistor (34) is stuck on the blade (26).
